# EUROPEAN PATENT SPECIFICATION

(11) **EP 1 810 872 B1**
(45) Date of publication and mention of the grant of the patent: **16.06.2010**
(21) Application number: 07001168.9
(22) Date of filing: 19.01.2007
(51) Int. Cl.: B60N 2/28

(54) **Child safety seat for automobiles**
Kindersitz für Personenwagen
Siège de sécurité pour enfants pour automobiles

(30) Priority: 23.01.2006 JP 2006014232
(43) Date of publication of application: 25.07.2007
(73) Proprietor: Aprica Children's Products Inc., Chuo-ku, Osaka-shi Osaka 542-0082 (JP)
(72) Inventor: Kassai, Kenzou, Osaka-shi, Osaka 542-0083 (JP); Inoue, Keiji, Chuo-ku, Osaka-shi Osaka 542-0082 (JP); Yamamoto, Masaki, Chuo-ku, Osaka-shi Osaka 542-0082 (JP)
(74) Representative: Feldmeier, Jürgen

(56) References cited:
- EP-A- 1 122 120
- EP-A- 1 477 357
- DE-C1- 19 752 536

## Description

### Background of the Invention

### Field of the Invention

This invention relates to a child safety seat for automobiles that is fixed on a car seat with a built-in seat belt of the car, and more particularly to a junior seat for automobiles used for toddlers to schoolchildren.

### Description of Background Art

An example of child safety seats for automobiles used for toddlers to schoolchildren is disclosed in Japanese unexamined patent publication No. 2001-294064. This published child safety seat for automobiles comprises a pair of outwardly movable side guards that are provided on opposite sides of a backrest for the sake of protecting the head region and shoulder region of a child. In an embodiment, each of the side guards includes independently position-adjustable upper and lower sub-side guards.

The embodiment of the child safety seat for automobiles disclosed in Japanese unexamined patent publication No. 2001-294064 can independently adjust the widthwise space between the pair of upper sub-side guards and the widthwise space between the pair of lower sub-side guards.

In the physical development of children, however, the shoulder width increases with the child's growth, but the head circumference does not greatly increase. Because of this, it is not often necessary to change the space between the pair of upper sub-side guards positioned lateral to the head according to a child's growth. The pair of upper sub-side guards are thus required to readily expand the child's field of vision rightward and leftward rather than to widen or lessen the space. For example, when the child is sleeping, it is desirable to bring the upper sub-side guards near both sides of his/her head so that his/her head does not lean right or left. On the other hand, when the child is awake, it is desirable to open up the space lateral to his/her head so as to increase his/her lateral field of vision.

European patent application EP 1 122 120 A1 shows a juvenile safety car seat which has upper and lower side guards attached to a backrest frame, respectively. The lower side guards are transversally slidable by a length L2. However, upper side guards are also transversally slidable, i.e., in the same direction as side guards, but by a smaller length L1. The upper side guards may correspond to a head protection pad region and the lower side guards may correspond to shoulder protection pad regions. An interlocking mechanism including link bars is provided that simultaneously enables adjustment of intervals between respective upper and lower side guards.

European patent application EP 1 477 357 A2 discloses a backrest with a headrest for motorcars. Wings of the headrest are pivotable in order to be inclined with respect to the headrest. By virtue of a control knob and rotating a spindle having threaded ends extending horizontally across the headrest, nut members connected to respective wings can be moved towards or in opposite direction with respect to each other. As a consequence, the wings can be locked at a desired inclination.

### Summary of the Invention

An object of the present invention is to provide a child safety seat for automobiles capable of adjusting the extent of a child's lateral field of vision at the sides of the child's head and adjusting the space between walls lateral to the child's shoulders with the physical development of the child.

The present invention is directed to a child safety seat for automobiles which is fixed on a car seat with the use of a built-in seat belt of the car. The child safety seat includes a seat and a backrest raised from the rear edge of the seat and extending upwardly. The backrest includes a backside wall located along the back of a child seated in the child safety seat, a pair of head protection side walls held on opposite side edges in the upper area of the backside wall so as to rotationally move about axes extending in the vertical direction, a rotation-angle adjustment mechanism for adjusting the rotation angle of the head protection side walls, a pair of shoulder protection side walls each having a wall raised and extending from opposite sides in the lower area of the backside wall and held on the backside wall so as to laterally slide from both sides of the backside wall, and a space adjustment mechanism for adjusting the space between the pair of shoulder protection side walls.

According to the present invention having the above configuration, the space between the pair of shoulder protection side walls lateral to a child's shoulders is adjustable in accordance with the physical development of the child or size of the child. Further, the head protection side walls provided so as to rotationally move about the axes extending in the vertical direction can prevent the child's head from leaning and can adjust the lateral field of vision of the child.

The child safety seat for automobiles of a preferable embodiment further includes a backrest-height adjustment mechanism for adjusting the height of the backrest relative to the seat. According to the embodiment, the head protection side walls and shoulder protection side walls can be set at an optimal height in accordance with the physical size or physical development of the child by adjusting the height of the backrest.

In the preferable embodiment, the rotation-angle adjustment mechanism includes vertical axes fixed at the side edges of the backside wall and leaf springs each fixed on the head protection side walls so as to resiliently hold the vertical axes. According to the embodiment, the head protection side walls can be retained at arbitrary angles by friction through the use of the resilience of the leaf springs, thereby making it easy to change the angle. Further, the angle of the head protection side walls can be independently adjusted. As another embodiment, the vertical axes can be fixed at the inner side edges of the head protection side walls and the leaf springs can be fixed on the opposite side edges of the backside wall.

In the preferable embodiment, the space adjustment mechanism includes: a pair of inwardly projecting portions each projecting and extending from the respective shoulder protection side walls in the width direction; a pair of engagement shafts each extending in the radial direction from a support point on the inner end of the inwardly projecting portion and rotatably attached about the support point as a center; and a rotary operation member having recess portions to receive tips of the engagement shafts and rotatably held on the backrest. According to the embodiment, turning the rotary operation member enables easy adjustment of the space between the pair of shoulder protection side walls.

In the preferable embodiment, the seat includes a pair of seat sidewalls raised from opposite sides thereof and extending upwardly. On the external surface of at least one of the seat sidewalls, a beverage container holder for holding a beverage container is attached. According to the embodiment, the child can put a beverage container in the beverage container holder, which is convenient. Preferably, attachment holes are provided on the exterior surfaces of the pair of seat sidewalls to detachably receive attachment portions of the beverage container holder. Accordingly, the beverage container holder can be selectively attached on one of the right and left sidewalls.

The child safety seat for automobiles according to the preferable embodiment includes an impact shield placed above the seat. The impact shield has a ventilating groove extending from the front end to the rear end. The impact shield is bulky at the front area of a child seated in the child safety seat for automobiles; however the provision of the ventilating groove prevents air from stagnating around the child safety seat.

### Brief Description of the Drawings

FIG. 1 is a front view illustrating an entire child safety seat for automobiles.
FIG. 2 is a perspective view illustrating the entire child safety seat for automobiles.
FIG. 3 is a front view of the child safety seat for automobiles with the cover removed.
FIG. 4 is a side view of the child safety seat for automobiles with the cover removed.
FIG. 5 is a rear view of the child safety seat for automobiles with the cover removed.
FIG. 6 is a rear view of the child safety seat for automobiles with the back cover member removed.
FIG. 7 is a perspective view of the child safety seat for automobiles with the cover removed.
FIG. 8 is a front view of the child safety seat for automobiles with a pair of head protection side walls rotationally moved inwardly.
FIG. 9 is a front view of the child safety seat for automobiles with a pair of shoulder protection side walls spaced out.
FIG. 10 is a front view of the child safety seat for automobiles with a backrest moved upwardly.
FIG. 11 is a front view illustrating a relative part of a rotation-angle adjustment mechanism.
FIG. 12 is a perspective view illustrating a relative part of the rotation-angle adjustment mechanism.
FIG. 13 illustrates a relative part of a space adjustment mechanism.
FIGS. 14(A) and 14(B) illustrate relative parts of the space adjustment mechanism: FIG. 14(A) shows a relative part of the space adjustment mechanism with a rotary operation member removed; and FIG. 14(B) shows the back of the rotary operation member.
FIG. 15 illustrates the pair of shoulder protection side walls being spaced out.
FIG. 16 is an illustration showing a relative part of a backrest-height adjustment mechanism.
FIG. 17 illustrates the external surface of one of the seat sidewalls.
FIG. 18 illustrates the external surface of the other seat sidewall.
FIG. 19 is a perspective view illustrating a beverage container holder.
FIG. 20 is a side view of the beverage container holder.
FIG. 21 is a bottom view of the beverage container holder.
FIG. 22 is a bottom view of the beverage container holder with a back cover plate removed.
FIG. 23 is a perspective view of a single seat.
FIG. 24 is a perspective view of a single impact shield.
FIG. 25 is a front view of the single impact shield.
FIG. 26 is a perspective view illustrating the impact shield with an inner member and an outer member separated.
FIG. 27 is a front view of a single outer member of the impact shield.

### Description of the Preferred Embodiments

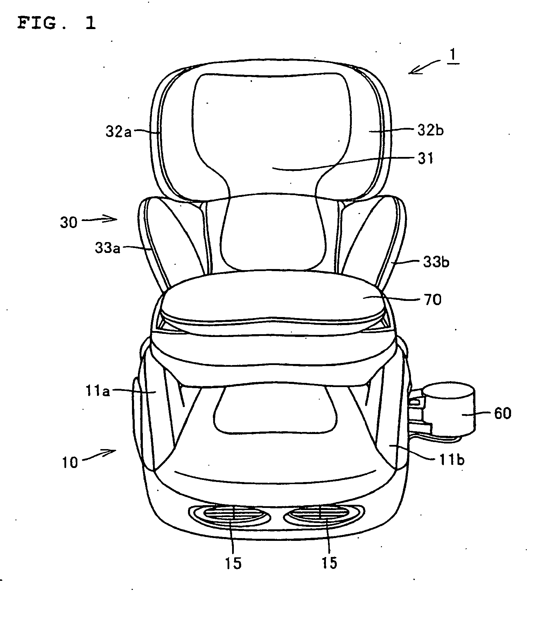

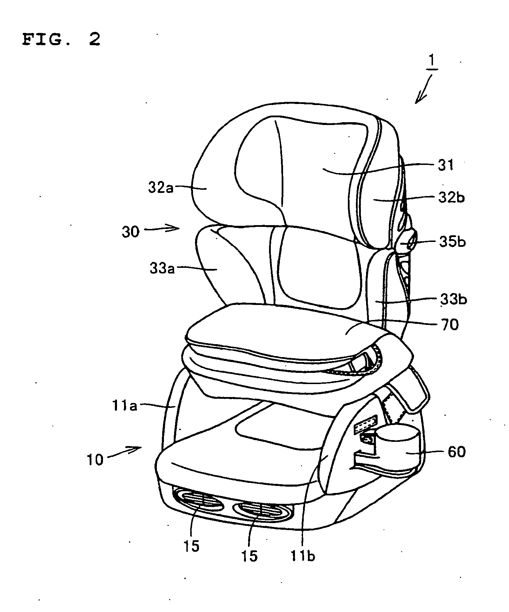

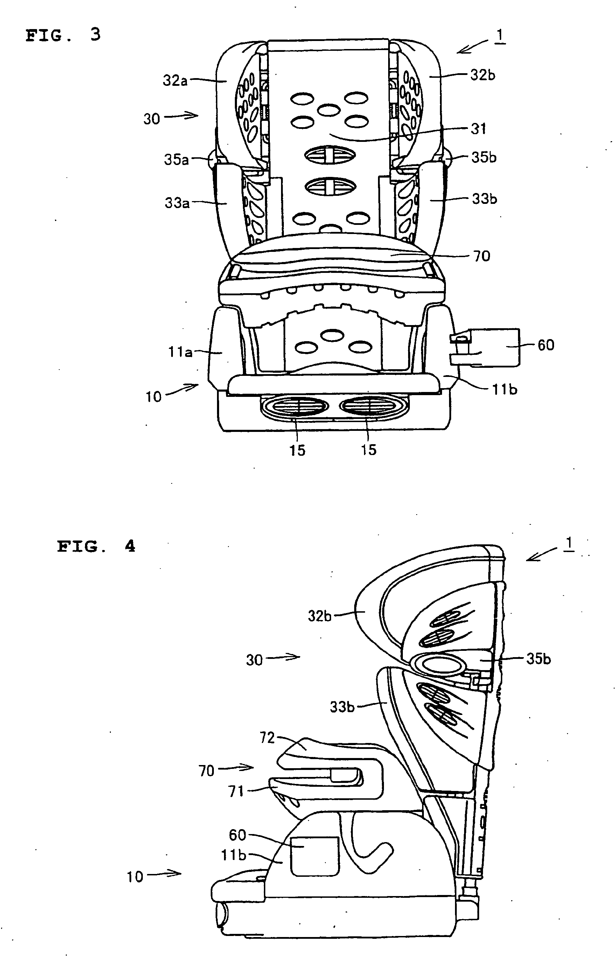

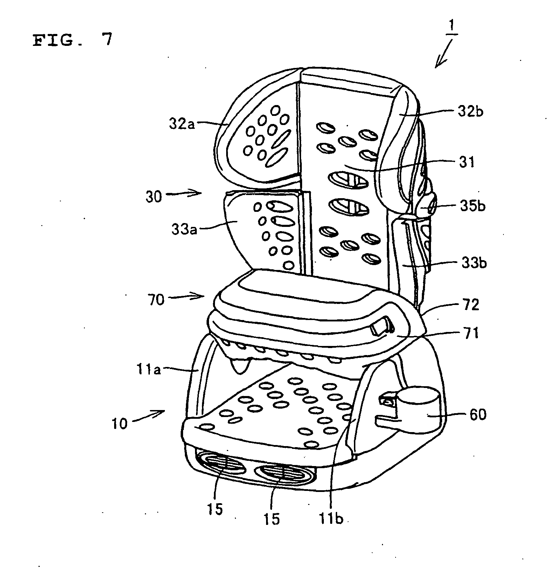

Referring to FIGS. 1 to 7, a general configuration of a child safety seat for automobiles according to an embodiment of the present invention will be described. FIGS. 1 and 2 illustrate the child safety seat with a cloth cover attached, while FIGS. 3 to 7 illustrate the child safety seat with the cloth cover removed.

The child safety seat for automobiles 1 is designed to be fixed on a car seat with a built-in seat belt of the car and comprises a seat 10, a backrest 30 raised from the rear edge of the seat 10 and extending upwardly, and an impact shield 70.

The backrest 30 includes a backside wall 31 located along the back of a seated child, a pair of head protection side walls 32a, 32b held on opposite side edges in the upper area of the backside wall 31 so as to rotationally move about respective axes extending in the vertical direction, a rotation-angle adjustment mechanism for adjusting the rotation angle of each head protection side wall, a pair of shoulder protection side walls 33a, 33b each having a wall raised and extending from opposite sides in the lower area of the backside wall 31 and held on the backside wall 31 so as to laterally slide from both sides of the backside wall 31, and a space adjustment mechanism for adjusting the space between the pair of shoulder protection side walls 33a and 33b. The details of the rotation-angle adjustment mechanism and space adjustment mechanism will be described later.

The height of the backrest 30 is adjustable with respect to the seat 10. This backrest height adjustment mechanism will be also described later in detail.

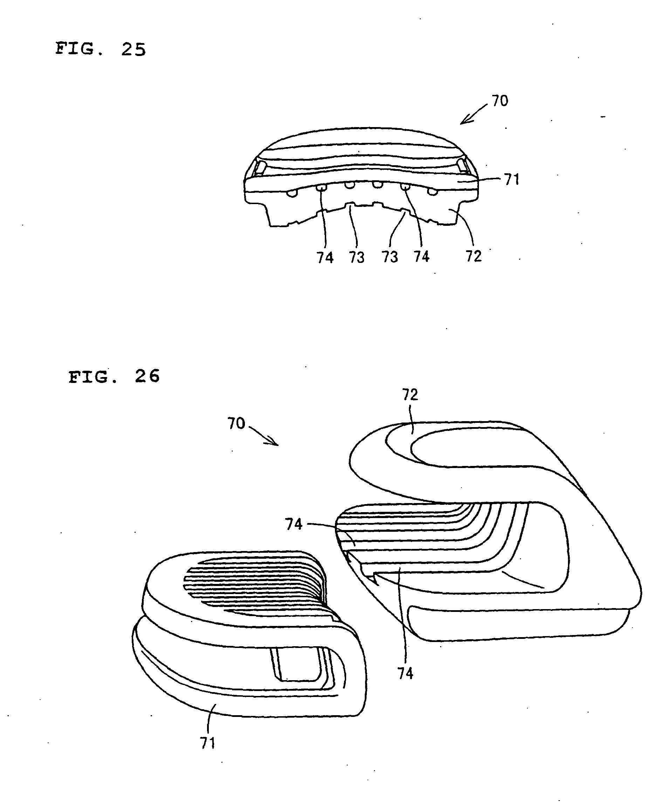

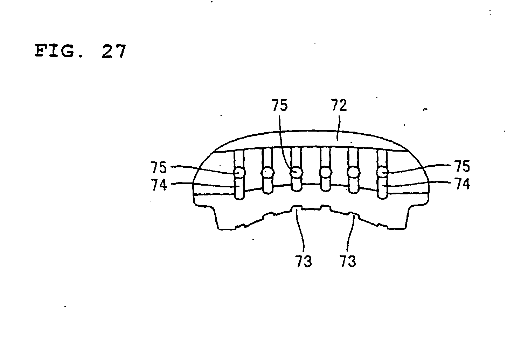

The seat 10 includes a pair of seat sidewalls 11a, 11b raised and extended upwardly from opposite sides thereof. The impact shield 70 is fixedly held at a predetermined position on the seat sidewalls 11a, 11b. FIGS. 25 to 27 illustrate the single impact shield 70 with the cloth cover removed. As is apparent from these drawings, the impact shield 70 has a cross-sectionally C-shaped opening at its front. The build-in seat belt of the car is guided so as to pass through the opening of the impact shield 70.

The illustrated child safety seat for automobiles 1 is for children ranging from toddlers to schoolchildren to sit, and occasionally referred to as a booster car seat. Toddlers sit in the safety seat with the impact shield 70 attached. When the seat is used in this configuration, the seat belt of the car does not restrain the toddler's body.

For children in the next growth stage, the safety seat is used without the impact shield 70. When the child safety seat for automobiles 1 is used in this configuration, the seat belt of the car restrains the body of the seated child. Between the pair of head protection side walls 32a, 32b and the pair of shoulder protection side walls 33a, 33b of the backrest 30, a pair of belt guiding members 35a, 35b are provided for guiding the seat belt of the car in this configuration of the child safety seat.

For children after the next growth stage, the safety seat is used with the backrest 30 removed from the seat 10. A schoolchild who has grown physically sits on the single seat 10 and is restrained by the built-in seat belt of the car.

As is apparent from the safety seat without the cloth cover shown in FIGS. 3 to 7, ventilation holes are provided on the almost all areas of the walls making up the backrest 30 and seat 10 in the illustrated embodiment.

The child safety seat for automobiles 1 with the backrest 30 attached on the seat 10 can realize the following three features.

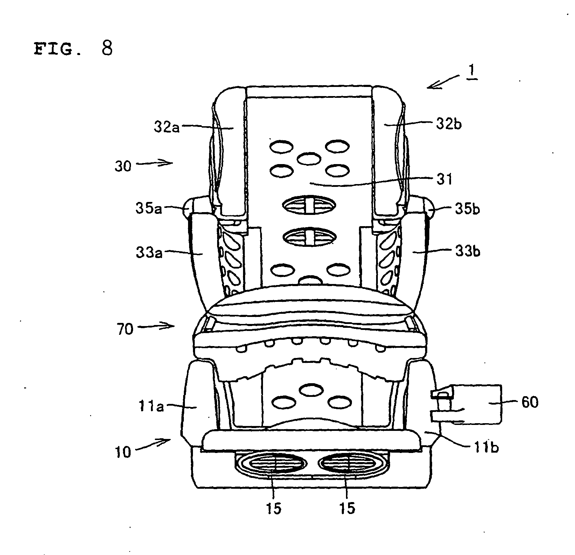

Specifically, the first feature is to allow the pair of head protection side walls 32a, 32b to rotationally move about the axes extending in the vertical direction. FIG. 8 shows the pair of head protection side walls 32a, 32b rotationally moved inwardly. For example, children sometimes sleep in the seat 1 with their heads tilted to right or left. In such a case, the illustrated embodiment, as shown in FIG. 8, allows the pair of head protection side walls 32a, 32b to rotationally move inwardly so that the inner surfaces of the head protection side walls 32a, 32b come closer to sides of the child's head, thereby preventing the child's head from leaning extremely to right or left. The rotation angle of the pair of head protection side walls 32a, 32b is independently adjustable. When the child is awake in the seat, the pair of head protection side walls 32a, 32b are rotationally moved outwardly, as shown in FIG. 3, in order to increase the lateral field of vision of the child.

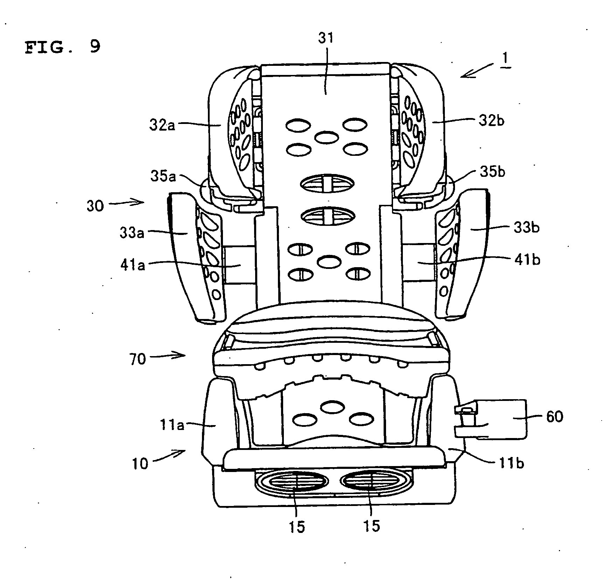

The second feature is to make it possible to adjust the space between the pair of shoulder protection side walls 33a and 33b. FIG. 9 shows the safety seat with the pair of shoulder protection side walls 33a, 33b slid outwardly in the width direction. When the child who is actually big or has physically grown sits in the seat, the pair of shoulder protection side walls 33a and 33b are widely spaced out.

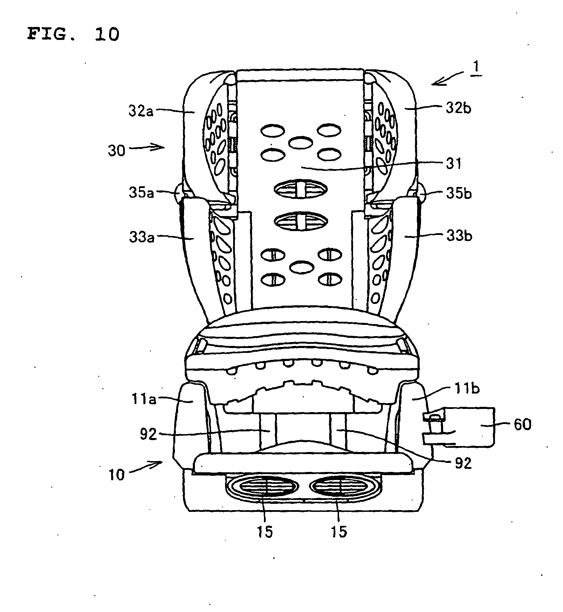

The third feature is to make it possible to adjust the height of the backrest 30. FIG. 10 shows the safety seat with the backrest 30 moved upwardly. When the child who is actually big or has physically grown sits in the seat, the pair of shoulder protection side walls 33a, 33b are widely spaced out.

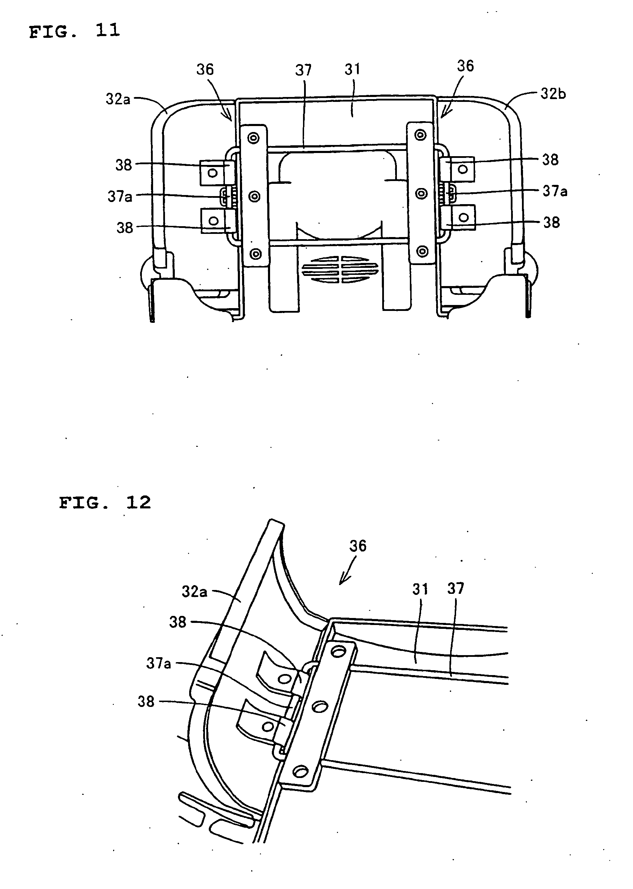

FIGS. 11 and 12 illustrate a relevant part of a rotation-angle adjustment mechanism 36 for adjusting the rotation angle of the pair of head protection side walls 32a, 32b. As an element making up the rotation-angle adjustment mechanism 36, a rectangular metal rod 37 is fixed on the backside wall 31 of the backrest. As another element of the rotation-angle adjustment mechanism 36, leaf springs 38 are fixed on the head protection side walls 32a, 32b so as to resiliently hold axes 37a, in the vertical direction, of the metal rod 37. Specifically, the leaf springs 38 are bent to catch the vertical axes 37a and fixed on the head protection side walls 32a, 32b at both edges. This structure produces friction between the leaf springs 38 and the vertical axes 37a of the metal rod 37 through the use of resilience, thereby making it possible to fixedly hold each of the head protection side walls 32a, 32b at any desired angles. There is no problem to fix the vertical axes on the head protection side walls 32a, 32b and the leaf springs at the opposite side edges of the backside wall 31.

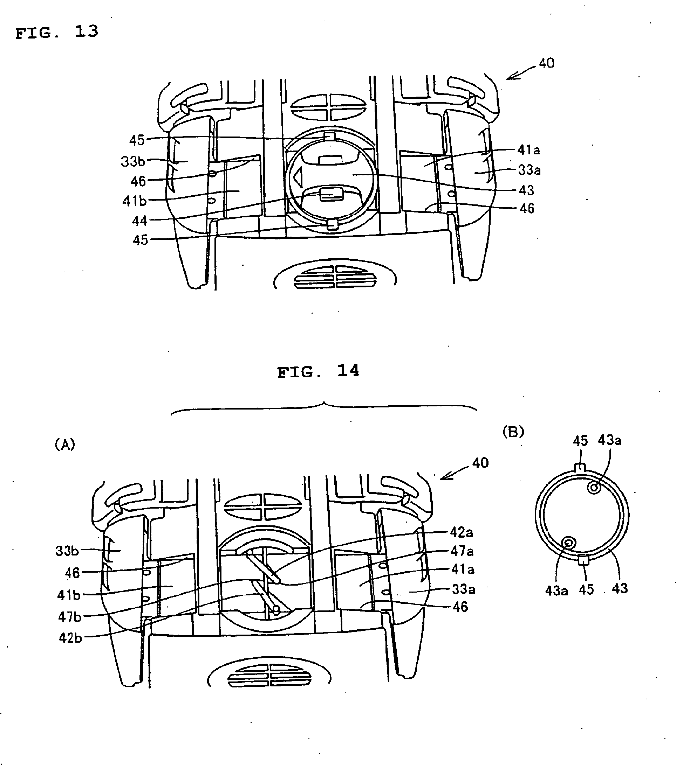

FIGS. 13 to 15 show a relevant part of the space adjustment mechanism 40 for adjusting the space between the pair of shoulder protection side walls 33a and 33b. In these drawings, for a clearer view of the structure of the space adjustment mechanism 40, a back cover member 34 located on the back surface of the backrest 30 is removed.

One of elements of the space adjustment mechanism 40 is a pair of inwardly projecting portions 41a, 41b jutted out from the pair of shoulder protection side walls 33a, 33b and extending inwardly in the width direction. Each of the inwardly projecting portions 41a, 41b is a flat rectangle and fits in guiding grooves 46 formed on the back surface of the backside wall 31. Accordingly, each of the inwardly projecting portions 41a, 41b can linearly move to the right and left.

As is apparent from FIG. 14(A), each of the inwardly projecting portions 41a, 41b has the inner end attached with engagement shafts 42a, 42b, respectively. The engagement shafts 42a, 42b extend from support points 47a, 47b in the radial direction and are rotatable about the support points 47a, 47b as centers. Each tip of the engagement shafts 42a, 42b is bent rearward.

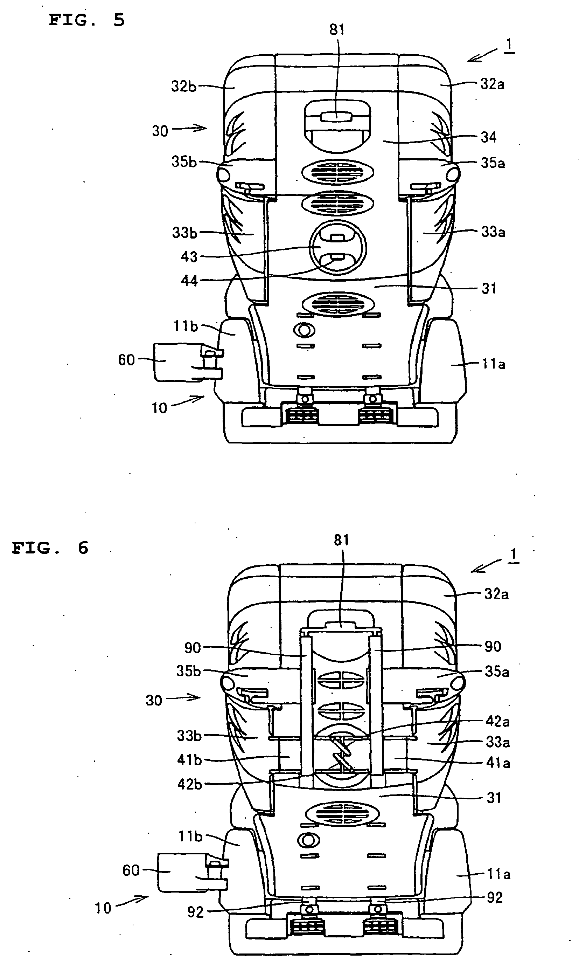

A rotary operation member 43 shown in FIG. 13 is rotatably held on the back surface of the backside wall 31. The rotary operation member 43 includes a push button 44 and projections 45 that are retracted inwardly by pushing the push button 44. In a state where the projections 45 are in engagement with engaging recessed portions of the back cover member 34 (see FIG. 5), the rotary operation member 43 is restrained from rotating. Pressing the push button 44 retracts the projections 45 to release the engagement, therefore allowing the rotary operation member 43 to rotate.

As shown in FIG. 14(B), recesses 43a are formed on the back of the rotary operation member 43 to receive the bent tips of the pair of engagement shafts 42a, 42b. The support point 47a of the engagement shafts 42a is positioned off the rotational center of the rotary operation member 43 rightward, while the support point 47b of the engagement shaft 42b is positioned off the rotational center of the rotary operation member 43 leftward. Accordingly, rotation of the rotary operation member 43 causes the bent tips of the engagement shafts 42a, 42b to turn, resulting in pushing and pulling the support points 47a, 47b in the width direction (lateral direction). As a result, the pair of shoulder protection side walls 33a, 33b move to the right and left which widens or lessens the space between the shoulder protection side walls 33a, 33b.

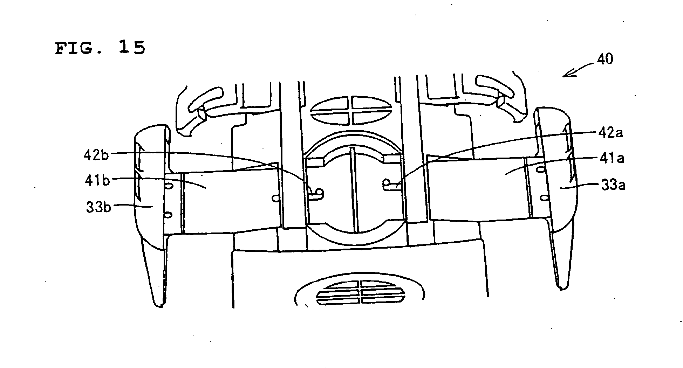

FIG. 14(A) shows the pair of shoulder protection side walls 33a, 33b with a small space therebetween, while FIG. 15 shows the pair of shoulder protection side walls 33a, 33b with a large space therebetween.

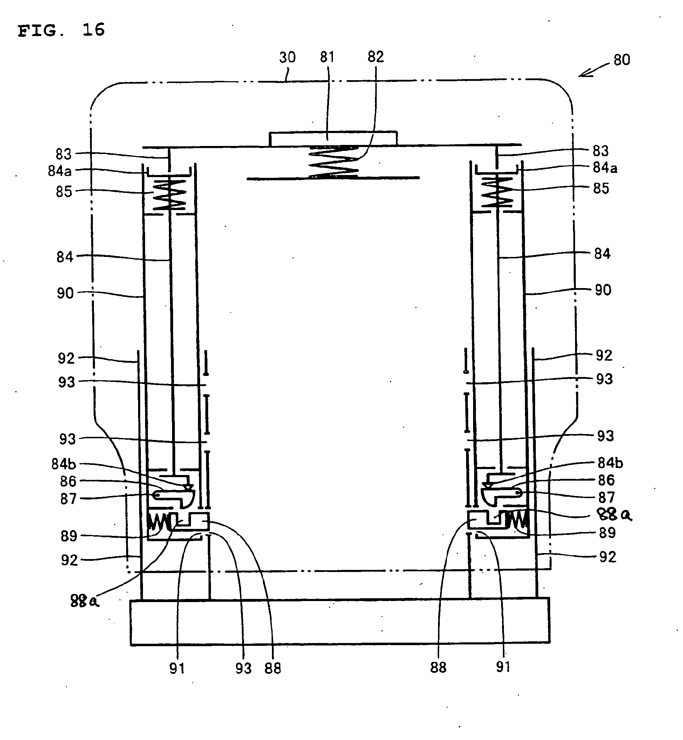

FIGS. 6 and 16 illustrate a backrest-height adjustment mechanism 80 for adjusting the height of the backrest 30 with respect to the seat 10. The backrest-height adjustment mechanism 80 comprises upper pipes 90 fixed on the backside wall 31 of the backrest 30 and lower pipes 92 fixed to the seat 10. The upper pipe 90 is slidably received in the lower pipe 92 and can slide up and down. On the backside wall 31, a vertically shiftable operation button 81 is provided. The operation button 81 is biased by a spring 82 so as to be always kept at an upper position. At the right and left edges of the operation button 81, downward projections 83 extending toward the inside of the upper pipes 90 are provided.

In each of the upper pipes 90, a vertical rod 84, a lever member 86, a lock pin 88 and a spring 89 are arranged. The vertical rod 84 includes an upper end 84a opposed to the downward projection 83 of the operation button 81 and a lower working portion 84b facing a tip of the lever member 86. The vertical rod 84 can be shifted vertically inside the upper pipe 90, but is biased by a spring 85 to be kept at an upper position. The lever member 86 can rotatably move about a pivot 87. It is not illustrated; however, the lever member 86 is biased by, for example, a spring so as to always rotationally move upwardly.

Each upper pipe 90 has a hole 91 at a position facing an end of the lock pin 88. The lock pin 88 has a recess 88a at a position opposed to a tip of a downward bent portion of the lever member 86. The lock pin 88 is biased by a spring 89 so as to always jut out from the hole 91 of the upper pipe 90.

Each lower pipe 92 fixed to the seat 10 has a plurality of holes 93 aligned separately in the vertical direction within a region to meet the hole 91 of the upper pipe 90. In a state shown in FIG. 16, the end of the lock pin 88 juts out of the hole 91 of the upper pipe 90 and fits in the lowermost hole 93 of the lower pipe 92. Thus, the backrest 30 is retained at the lowest position.

Depressing the operation button 81 of the backrest-height adjustment mechanism 80 in the state shown in FIG. 16 moves the vertical rod 84 downwardly to rotationally move the lever member 86 downwardly. Then, the tip of the downward bent portion of the lever member 86 engages the recess 88a of the lock pin 88 to retract the lock pin 88. Consequently, the engagement of the lock pin 88 and the hole 93 of the lower pipe 92 is released, thereby allowing the backrest 30 to move upwardly.

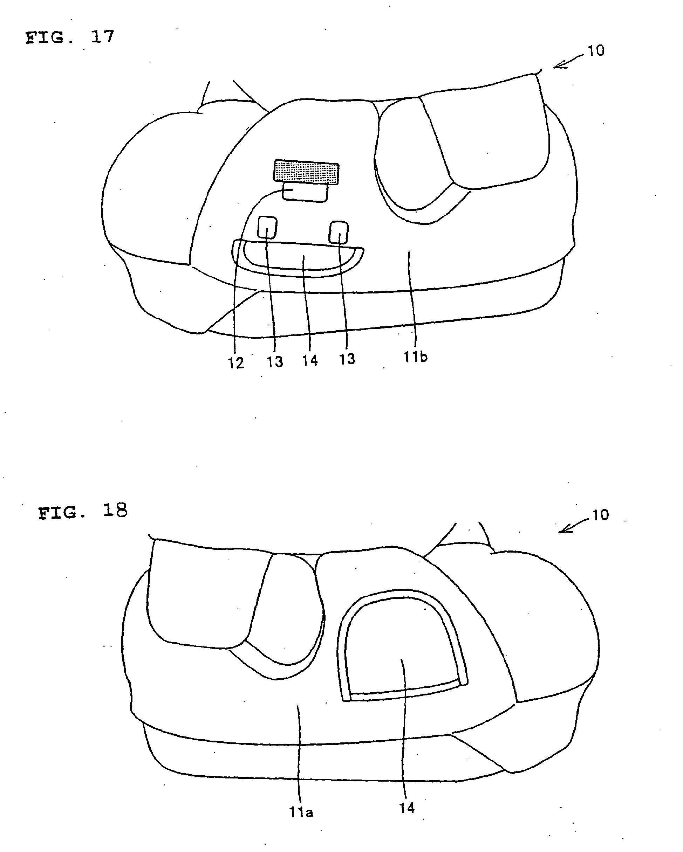

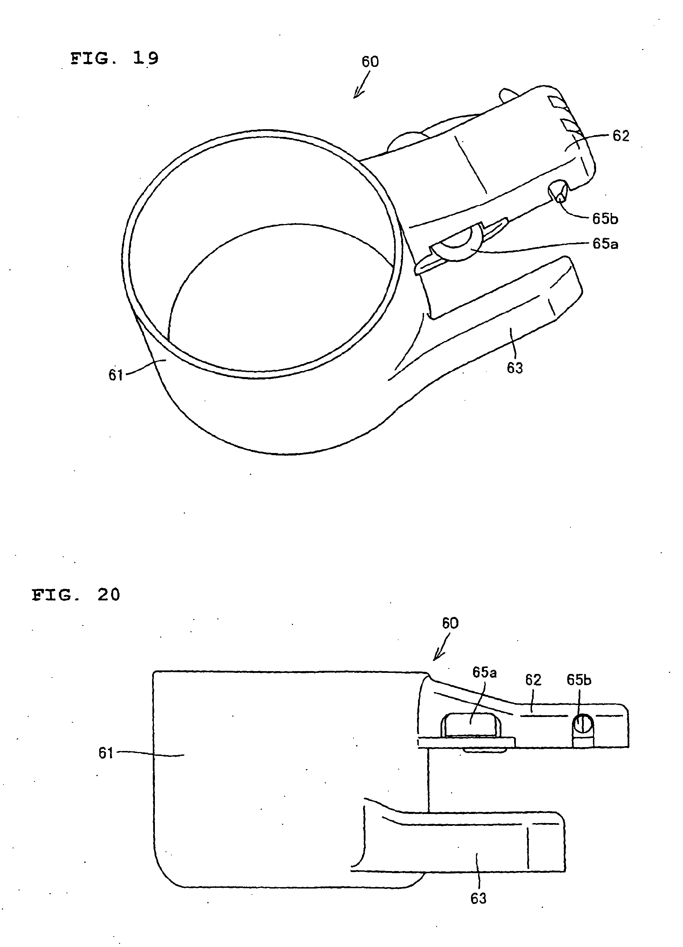

As shown in FIGS. 1 and 2, a beverage container holder 60 for holding a beverage container is attached on the exterior surface of the seat sidewall 11b of the seat 10. The beverage container holder 60 can be removed from the seat sidewall 11b and be attached on the exterior surface of the seat sidewall 11a. This will be described by referring to FIGS. 17 to 22.

As shown in FIG. 17, provided on the exterior surface of the seat sidewall 11b is a wide hole 12 and two narrow holes 13. The cloth cover which is put over the seat 10 has a covering flap 14 for hiding the holes 12, 13. In FIG. 17, the covering flap 14 is tucked in and the holes 12, 13 are exposed. The seat sidewall 11a is also provided with a wide hole and two narrow holes in the same manner on the exterior surface. In a state shown in FIG. 18, the covering flap 14 hides these holes.

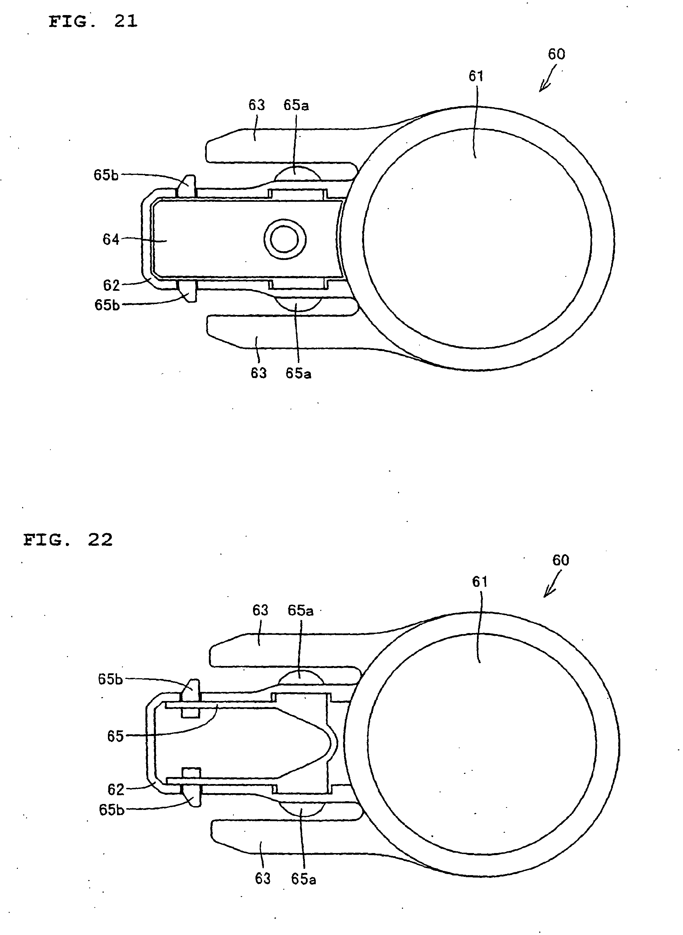

The beverage container holder 60 includes a cup-shaped container receiver 61 for supporting the beverage container from the bottom, a wide projection 62 and two narrow projections 63. The wide projection 62 is received in the wide hole 12 of the seat sidewall 11a or 11b, while the narrow projections 63 are received in the narrow holes 13 of the seat sidewall 11a or 11b. As shown in FIGS. 21 and 22, the wide projection 62 has a resilient, transformable resin engaging member 65 and a back cover plate 64 for covering the resin engaging member 65 from the back side. The resin engaging member 65 is curved into a "C" shape and includes a pair of engaging projections 65b jutting outwardly from the ends of legs thereof and a pair of push buttons 65a jutting outwardly from a nearly central area thereof. Squeezing the pair of push buttons 65a inwardly retracts the pair of engaging projections 65b inwardly. The pair of engaging projections 65b engage engagement holes formed inside the wide hole 12 of the seat sidewalls 11a, 11b so as to prevent the beverage container holder 60 from detaching from the seat sidewall. Removal of the beverage container holder 60 is achieved by squeezing the push button 65a inwardly.

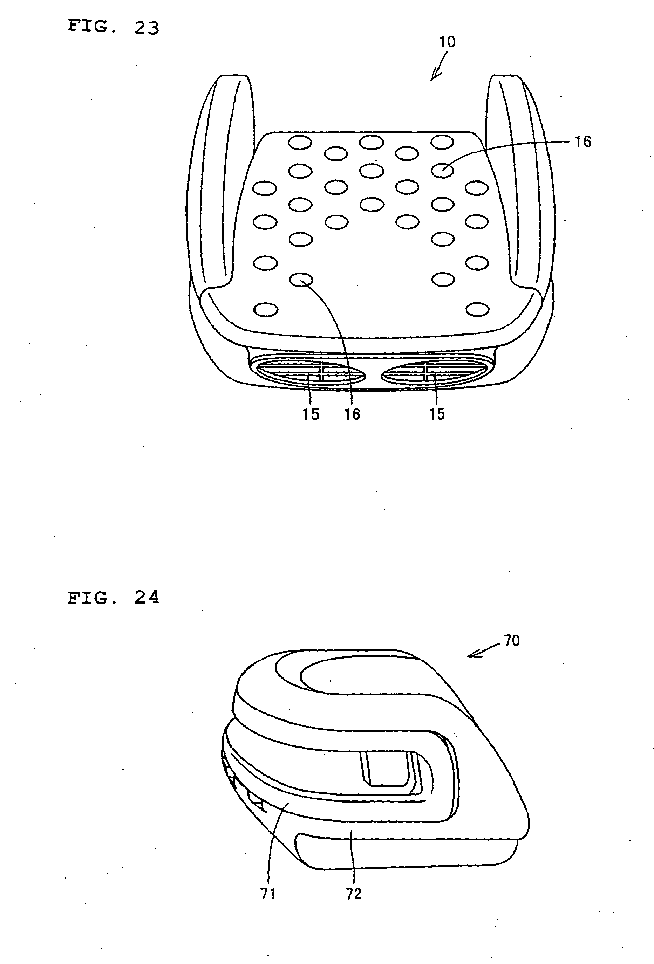

FIG. 23 illustrates the seat 10 with the cloth cover member removed. The seat 10 includes ventilating windows 15 on the front end face and a plurality of ventilating openings 16, communicating with the ventilating windows 15, on the seating face.

FIG. 24 illustrates an impact shield 70 with the cloth cover member removed. The impact shield 70 includes a ventilating groove extending from the front end to rear end. More specifically, the impact shield 70 includes a cross-sectionally C-shaped resin inner member 71 having an opening at its front and a cross-sectionally C-shaped polystyrene-foam outer member 72 formed so as to surround the inner member 71.

As is apparent from FIGS. 25 to 27, the outer member 72 of the impact shield 70 has an upper wall, rear wall and lower wall that form the C-shaped cross section. A plurality of underside grooves 73 are formed from the front end to rear end of the lower surface of the lower wall, while a plurality of upside grooves 74 are formed from the front end of the upper surface of the lower wall to the inner surface of the rear wall. Through-holes 75 are formed on the upside grooves 74 on the rear wall. Thus, an impact shield 70 having good ventilation characteristics can be obtained.

The foregoing has described the embodiments of the present invention by referring to the drawings. However the invention should not be limited to the illustrated embodiments. It should be appreciated that various modifications and changes can be made to the illustrated embodiments within the scope of the appended claims and their equivalents.

The present invention is advantageously utilized in child safety seats for automobiles.

## Claims

1. A child safety seat for automobiles fixable on a car seat with the use of a built-in seat belt of the car comprising:
a seat (10); and
a backrest (30) raised from the rear edge of said seat and extending upwardly, said backrest comprising:
a backside wall (31) located along the back of a seated child;
a pair of head protection side walls (32a, 32b) held on opposite side edges in the upper area of said backside wall and rotationally moving about axes extending in the vertical direction;
a rotation-angle adjustment mechanism (36) for adjusting the rotation angle of said head protection side walls;
a pair of shoulder protection side walls (33a, 33b) each having a wall raised and extending from opposite sides in the lower area of said backside wall and held on the backside wall so as to laterally slide from both sides of the backside wall; and
a space adjustment mechanism (40) for adjusting the space between said pair of shoulder protection side walls;
wherein said rotation-angle adjustment mechanism (36) comprises vertical axes (37a) fixed at the side edges of either one of said backside wall and said head protection side walls and leaf springs (38) fixed on the other one of said backside wall and said head protection side walls so as to resiliently hold said vertical axes.

2. The child safety seat for automobiles according to claim 1 further comprising a backrest-height adjustment mechanism (80) for adjusting the height of said backrest relative to said seat.

3. The child safety seat for automobiles according to any one of claims 1 to 2,
wherein said space adjustment mechanism (40) comprises a pair of inwardly projecting portions (41a, 41b) each projecting and extending from said respective shoulder protection side walls in the width direction, a pair of engagement shafts (42a, 42b) each extending in the radial direction from a support point on the inner end of the inwardly projecting portion and rotatably attached about the support point as a center, and a rotary operation member (43) having recess portions (43a) to receive tips of the engagement shafts and rotatably held on the backrest.

4. The child safety seat for automobiles according to any one of claims 1 to 3,
wherein said seat includes a pair of seat sidewalls (11a, 11b) raised from opposite sides thereof and extending upwardly, and a beverage container holder (60) for holding a beverage container is attached on the external surface of at least one of the pair of seat sidewalls.

5. The child safety seat for automobiles according to claim 4, wherein attachment holes (12, 13) are provided on the exterior surfaces of said pair of seat sidewalls to detachably receive attachment portions of the beverage container holder.

6. The child safety seat for automobiles according to any one of claims 1 to 5, further comprising an impact shield (70) placed above said seat, wherein said impact shield has a ventilating groove extending from the front end to the rear end.

## Patentansprüche

1. Ein Kindersicherheitssitz für Kraftfahrzeuge, welcher unter Verwendung eines eingebauten Sitzgurtes des Fahrzeugs auf einem Fahrzeugsitz befestigbar ist, umfassend:
einen Sitz (10); und
eine Rückenlehne (30), die sich von einer hinteren Kante des Sitzes erhebt und nach oben erstreckt, wobei die Rückenlehne umfasst:
eine Rückseitenwand (31), die sich entlang dem Rücken eines sitzenden Kindes befindet;
ein Paar Kopfschutzseitenwände (32a, 32b), die an gegenüberliegenden Seitenkanten im oberen Bereich der Rückseitenwand gehalten werden und sich drehend um sich in der vertikalen Richtung erstreckende Achsen zu bewegen;
eine Drehwinkeleinstellvorrichtung (36) zum Einstellen des Drehwinkels der Kopfschutzseitenwände;
ein Paar Schulterschutzseitenwände (33a, 33b), die jeweils eine Wand besitzen, die sich von gegenüberliegenden Seiten im unteren Bereich der Rückseitenwand erheben und erstrecken und so an der Rückseitenwand gehalten werden, dass sie von beiden Seiten der Rückseitenwand ausgehend seitlich gleiten; und
eine Raumeinstellvorrichtung (40) zum Einstellen des Raums zwischen dem Paar von Schulterschutzseitenwänden;
wobei die Drehwinkeleinstellvorrichtung (36) vertikale Achsen (37a), die an den Seitenkanten der Rückseitenwand oder der Kopfschutzseitenwände befestigt sind, sowie Blattfedern (38) umfasst, welche an dem jeweils anderen aus der Rückseitenwand oder der Kopfschutzseitenwände befestigt sind, um die vertikalen Achsen federnd zu halten.

2. Der Kindersicherheitssitz für Kraftfahrzeuge gemäß Anspruch 1, ferner umfassend eine Rückenlehnen-Höheneinstellvorrichtung (80) zum Einstellen der Höhe der Rückenlehne relativ zu dem Sitz.

3. Der Kindersicherheitssitz für Kraftfahrzeuge gemäß einem der Ansprüche 1 bis 2,
wobei die Raumeinstellvorrichtung (40) ein Paar nach innen vorstehender Abschnitte (41 a, 41b) umfasst, welche sich jeweils von den entsprechenden Schulterschutzseitenwänden in der Querrichtung hervorstehend erstrecken, umfassend ein Paar Eingriffswellen (42a, 42b), die sich jeweils in der radialen Richtung von einem Stützpunkt an dem inneren Ende des nach innen vorstehenden Abschnitts erstrecken und um den Stützpunkt als Angelpunkt drehbar angebracht sind, und umfassend ein drehbares Bedienelement (43), welches vertiefte Abschnitte (43a) besitzt, um Spitzen der Eingriffswellen aufzunehmen, und die drehbar an der Rückenlehne gehalten werden.

4. Der Kindersicherheitssitz für Kraftfahrzeuge gemäß einem der Ansprüche 1 bis 3,
wobei der Sitz ein Paar von Sitzseitenwänden (11a, 11b) aufweist, die sich von gegenüberliegenden Seiten desselben erheben und nach oben erstrecken, und wobei eine Getränkebehälterhalterung (60) zum Halten eines Getränkebehälters an der äußeren Oberfläche wenigstens einer des Paares von Sitzseitenwänden angebracht ist.

5. Der Kindersicherheitssitz für Kraftfahrzeuge gemäß Anspruch 4, wobei Anbringlöcher (12, 13) an der äußeren Oberfläche des Paares von Sitzseitenwänden vorgesehen sind, um wieder entfernbar Anbringabschnitte der Getränkebehälterhalterung aufzunehmen.

6. Der Kindersicherheitssitz für Kraftfahrzeuge gemäß einem der Ansprüche 1 bis 5, ferner umfassend einen Aufprallschutz (70), der oberhalb des Sitzes platziert ist, wobei der Aufprallschutz einen sich vom vorderen Ende bis zum hinteren Ende erstreckenden Lüftungsschlitz besitzt.

## Revendications

1. Siège de sécurité pour enfants destiné à un véhicule automobile pouvant être fixé sur un siège de voiture avec l'utilisation d'une ceinture de sécurité incorporée à la voiture, comprenant :
un siège (10) ; et
un dossier (30) relevé du bord arrière dudit siège et s'étendant vers le haut, ledit dossier comprenant :
une paroi latérale arrière (31) située le long du dos d'un enfant assis ;
une paire de parois latérales (32a, 32b) de protection de la tête maintenue sur des bords latéraux opposés dans la zone supérieure de ladite paroi latérale arrière et se déplaçant de manière rotative autour d'axes qui s'étendent dans la direction verticale ;
un mécanisme (36) d'ajustement d'angle de rotation pour ajuster l'angle de rotation desdites parois latérales de protection de la tête ;
une paire de parois latérales (33a, 33b) de protection des épaules ayant chacune une paroi relevée et s'étendant de côtés opposés dans la zone inférieure de ladite paroi latérale arrière et maintenue sur la paroi latérale arrière de manière à coulisser latéralement des deux côtés de la paroi latérale arrière ; et
un mécanisme (40) d'ajustement d'espace pour ajuster l'espace entre ladite paire de parois latérales de protection des épaules ;
où ledit mécanisme (36) d'ajustement d'angle de rotation comprend des axes verticaux (37a) fixés aux bords latéraux de l'une ou l'autre de ladite paroi latérale arrière et desdites parois latérales de protection de la tête et des ressorts à lames (38) fixés sur l'autre de ladite paroi latérale arrière et desdites parois latérales de protection de la tête de manière maintenir élastiquement lesdits axes verticaux.

2. Siège de sécurité pour enfants destiné à un véhicule automobile selon la revendication 1 comprenant en plus un mécanisme (80) d'ajustement de la hauteur du dossier pour ajuster la hauteur dudit dossier par rapport audit siège.

3. Siège de sécurité pour enfants destiné à un véhicule automobile selon l'une quelconque des revendications 1 à 2, dans lequel ledit mécanisme (40) d'ajustement d'espace comprend une paire de parties (41a, 41b) se projetant vers l'intérieur chacune se projetant et s'étendant desdites parois latérales respectives de protection des épaules dans la direction de la largeur, une paire d'arbres d'engagement (42a, 42b) s'étendant chacun dans la direction radiale en partant d'un point de support sur l'extrémité interne de la partie se projetant vers l'intérieur et fixé de manière rotative autour du point de support tel un centre, et un organe opérationnel rotatif (43) ayant des parties évidées (43a) pour recevoir les pointes des arbres d'engagement et maintenu de manière rotative sur le dossier.

4. Siège de sécurité pour enfants destiné à un véhicule automobile selon l'une quelconque des revendications 1 à 3, dans lequel ledit siège comprend une paire de parois latérales (11a, 11b) du siège relevées de côtés opposés correspondants et s'étendant vers le haut, et un élément de maintien (60) de récipient à boisson pour maintenir un récipient à boisson est fixé sur la surface externe d'au moins l'une de la paire de parois latérales du siège.

5. Siège de sécurité pour enfants destiné à un véhicule automobile selon la revendication 4, dans lequel des trous de fixation (12, 13) sont pourvus sur les surfaces extérieures de ladite paire de parois latérales du siège pour recevoir de manière amovible des parties de fixation de l'élément de maintien du récipient à boisson.

6. Siège de sécurité pour enfants destiné à un véhicule automobile selon l'une quelconque des revendications 1 à 5, comprenant en plus une protection (70) contre les impacts placée au-dessus dudit siège, où ladite protection contre les impacts possède une rainure de ventilation s'étendant de l'extrémité avant à l'extrémité arrière.
